# EUROPEAN PATENT APPLICATION

(11) **EP 2 999 105 A1**
(43) Date of publication of application: **23.03.2016**
(21) Application number: 14275194.0
(22) Date of filing: 17.09.2014
(51) Int. Cl.: H02M 1/32, H02M 7/483, H02H 7/122

(54) **Hybrid modular multicell converter with bidirectional thyristor switches**

(71) Applicant: ALSTOM Technology Ltd, 5400 Baden (CH)
(72) Inventor: Moreno Munoz, Francisco Jose, Stafford, ST16 2QZ (GB); Trainer, David Reginal, Alvaston, Derby DE24 0AQ (GB)
(74) Representative: Potter Clarkson LLP

(57) **Abstract**

A voltage source converter (10; 70), for use in high voltage DC power transmission and reactive power compensation, comprises at least one converter limb (12A, 12B, 12C) that includes a first DC terminal (14A, 14B, 14C) for connection in use to a higher voltage potential of a DC network (16), a second DC terminal (18A, 18B, 18C) for connection in use to a lower voltage potential of the said DC network (16) and an AC terminal (20A, 20B, 20C) for connection in use to an AC network (22). The or each converter limb (12A, 12B, 12C) defines a first limb portion (24A, 24B, 24C) that extends between the first DC terminal (14A, 14B, 14C) and the AC terminal (20A, 20B, 20C) and includes a first switching element (26A, 26B, 26C) connected in series with a first chain-link converter 28A, 28B, 28C) that is operable to generate a voltage waveform at the AC terminal (20A, 20B, 20C). The first switching element (26A, 26B, 26C) defines a first forward current path 30A, 30B, 30C) to allow current to flow through the first switching element (26A, 26B, 26C) in a forward direction (F) from the first DC terminal (14A, 14B, 14C) to the AC terminal (20A, 20B, 20C) and a first reverse current path (32A, 32B, 32C) to allow current to flow through the first switching element (26A, 26B, 26C) in a reverse direction (R) from the AC terminal (20A, 20B, 20C) to the first DC terminal (14A, 14B, 14C). The or each converter limb (12A, 12B, 12C) further defines a second limb portion (34A, 34B, 34C) that extends between the second DC terminal (18A, 18B, 18C) and the AC terminal (20A, 20B, 20C) and includes a second switching element (36A, 36B, 36C) connected in series with a second chain-link converter (38A, 38B, 38C) that is operable to generate a voltage waveform at the AC terminal (20A, 20B, 20C). The second switching element (36A, 36B, 36C) defines a second forward current path (40A, 40B 40C) to allow current to flow through the second switching element (36A, 36B, 36C) in a forward direction (F) from the AC terminal (20A, 20B, 20C) to the second DC terminal (18A, 18B, 18C) and a second reverse current path (42A, 42B, 42C) to allow current to flow through the second switching element (36A, 36B, 36C) in a reverse direction (R) from the second DC terminal (18A, 18B, 18C) to the AC terminal (20A, 20B, 20C). At least one of the first and second switching elements (26A, 26B, 26C, 36A, 36B, 36C) in the or each converter limb (12A, 12B, 12C) is configured to inhibit the flow of current through the corresponding reverse current path (32A, 32B, 32C, 42A, 42B, 42C) in the event of a DC short-circuit fault between the first and second DC terminals (14A, 14B, 14C, 18A, 18B, 18C).

## Description

This invention relates to a voltage source converter for use in high voltage direct current (HVDC) power transmission and reactive power compensation.

In HVDC power transmission, alternating current (AC) electrical power is converted to high voltage direct current (DC) power for transmission via overhead lines and/or undersea cables. This conversion reduces the cost per kilometre of the lines and/or cables, and is therefore cost-effective when power needs to be transmitted over a long distance. Once the transmitted electrical power reaches its target destination, the high voltage DC electrical power is converted back to AC electrical power before being distributed to local networks.

The conversion between AC power and DC power is also commonly utilized in power transmission networks in circumstances where it is necessary to interconnect two AC networks operating at different frequencies.

Converters are required at each interface between AC and DC networks to effect the required conversion between AC power and DC power, and one such form of converter is a voltage source converter (VSC).

According to an aspect of the invention there is provided a voltage source converter for use in high voltage DC power transmission and reactive power compensation, the voltage source converter comprising at least one converter limb including a first DC terminal for connection in use to a higher voltage potential of a DC network, a second DC terminal for connection in use to a lower voltage potential of the said DC network and an AC terminal for connection in use to an AC network,
the or each converter limb defining a first limb portion extending between the first DC terminal and the AC terminal and including a first switching element connected in series with a first chain-link converter operable to generate a voltage waveform at the AC terminal, the first switching element defining a first forward current path to allow current to flow through the first switching element in a forward direction from the first DC terminal to the AC terminal and a first reverse current path to allow current to flow through the first switching element in a reverse direction from the AC terminal to the first DC terminal,
the or each converter limb further defining a second limb portion extending between the second DC terminal and the AC terminal and including a second switching element connected in series with a second chain-link converter operable to generate a voltage waveform at the AC terminal, the second switching element defining a second forward current path to allow current to flow through the second switching element in a forward direction from the AC terminal to the second DC terminal and a second reverse current path to allow current to flow through the second switching element in a reverse direction from the second DC terminal to the AC terminal, and
at least one of the first and second switching elements in the or each converter limb being configured to inhibit the flow of current through the corresponding reverse current path in the event of a DC short-circuit fault between the first and second DC terminals.

The inclusion of at least one switching element that is configured to inhibit the flow of current through the corresponding reverse current path permits the blocking of a fault current that would otherwise flow in the reverse direction through the corresponding converter limb when a DC short-circuit fault arises.

Such a switching element therefore permits the use in the chain-link converters of simpler, less expensive chain-link modules which have low switching losses, but which are unable to generate an opposing voltage to block a fault current flowing in the said reverse direction.

Preferably the reverse current path of the at least one switching element is defined by an externally-commutated semiconductor switch.

Externally-commutated semiconductor switches, i.e. semiconductor switches that latch in an on-state when switched on and can only then be switched off by one or more external components such as may be found elsewhere in the circuit in which the semiconductor switch is located (thereby giving rise to so-called 'natural' commutation) or in a separate commutation circuit (thereby giving rise to so-called 'forced' commutation), support a large voltage and so facilitate switching of the corresponding chain-link converter in and out of circuit within the associated limb portion during normal operation of the voltage source converter. This is in contrast to so-called self-commutated semiconductor switches, such as Insulated Gate Bipolar Transistors (IGBTs), which can be switched both on and off without the need for external components, but are able only to support a much smaller voltage.

Optionally the reverse current path of the at least one switching element is defined by a thyristor.

Thyristors have particularly desirable high voltage performance characteristics. In addition they can be inhibited from conducting a current, i.e. prevented from switching on, by withholding a turn-on signal.

The voltage source converter may include a plurality of converter limbs, each of which includes respective first and second limb portions that have corresponding series-connected switching elements and chain-link converters.

Such an arrangement permits in the event of a DC short-circuit fault and AC current, e.g. as driven within the voltage source converter by a sinusoidal AC network, to be directed through respective limb portions in a manner that causes the current flowing through the reverse current path of the corresponding first or second switching element to fall to zero, and thereby cause an associated externally-commutated semiconductor switch to turn off.

In a preferred embodiment of the invention the first chain-link converter in the first limb portion of each converter limb and the second chain-link converter in the second limb portion of each converter limb always permit the flow of current therethrough in the reverse direction.

Configuring the voltage source converter of the invention in such a manner desirably permits the directing of a positive portion of an AC current resulting from, e.g. a corresponding sinusoidal AC network voltage, through the first reverse current path of a first switching element in the first limb portion of a first converter limb and through the second reverse current path of a second switching element in the second limb portion of a second converter limb different to the first converter limb, and so permits any externally-commutated semiconductor switch associated with one or other of the said first and second switching elements to turn off and thereafter block a fault current.

Such configuration of the voltage source converter also desirably permits the directing of a negative portion of the said AC current through the first reverse current path of a first switching element in the first limb portion of further converter limb different to the first converter limb and through the second reverse current path of a second switching element in the second limb portion of a still further converter limb different to the aforementioned further converter limb, and so similarly permits any externally-commutated semiconductor switch associated with one or other of the said first and second switching elements to turn off and thereafter block a fault current.

Optionally the voltage source converter further includes:
three phase elements defining a star connection in which a first end of each phase element is connected to a common junction, each phase element being operably associated in use with a respective phase of a three-phase AC network and including at least one impedance element;
at least two converter limbs each of which includes respective first and second limb portions that have corresponding series-connected switching elements and chain-link converters, the AC terminal of each converter limb being connected in series with a second end of a phase element of the star connection; and
a third DC terminal connected between the first and second DC terminals, the third DC terminal being connected to the common junction of the star connection to define an auxiliary connection, wherein in use a current is injected into the auxiliary connection to modify a voltage of each of a plurality of series-connected chain-link modules within each chain-link converter of each limb portion.

Such an arrangement additionally enables zero-phase sequence triplen currents, e.g. typically third harmonic currents, to be circulated within the voltage source converter and the phase elements of the star connection. The circulation of such currents desirably helps to manage energy levels within the plurality of series-connected chain-link modules within each said chain-link converter.

There now follows a brief description of preferred embodiments of the invention, by way of non-limiting example, with reference being made to the following figures in which:
Figure 1(a) shows a schematic view of a voltage source converter according to a first embodiment of the invention;
Figure 1 (b) shows an enlarged portion of the voltage source converter shown in Figure 1 (a);
Figures 2(a) to 2(c) show the directing of positive and negative portions of an AC current through first and second reverse current paths in differing converter limbs of the voltage source converter shown in Figure 1;
Figure 3 shows the blocking of a fault current though each converter limb following the directing of positive and negative portions of an AC current illustrated in Figures 2(a) to 2(c); and
Figure 4 shows a schematic view of a voltage source converter according to a second embodiment of the invention.

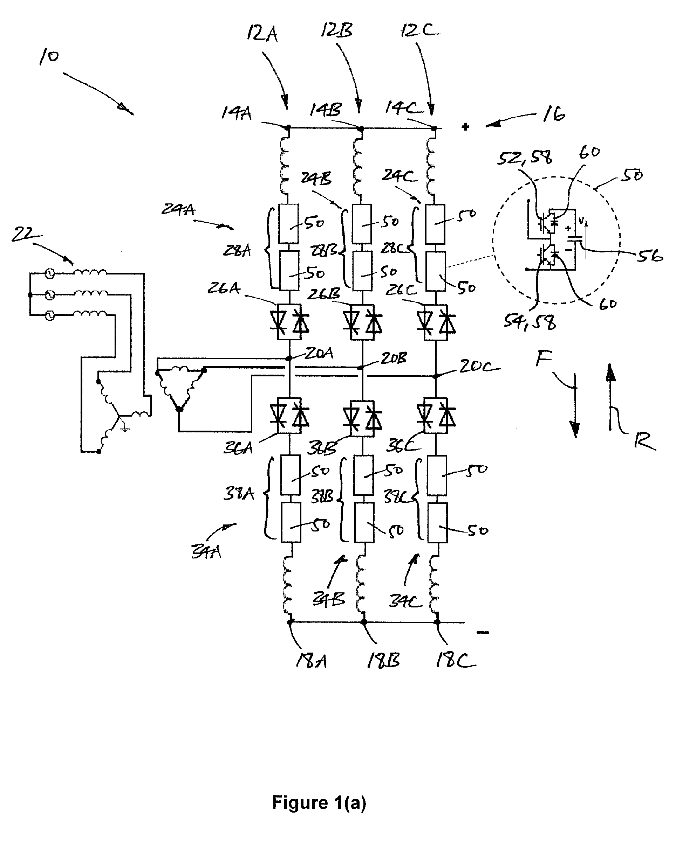

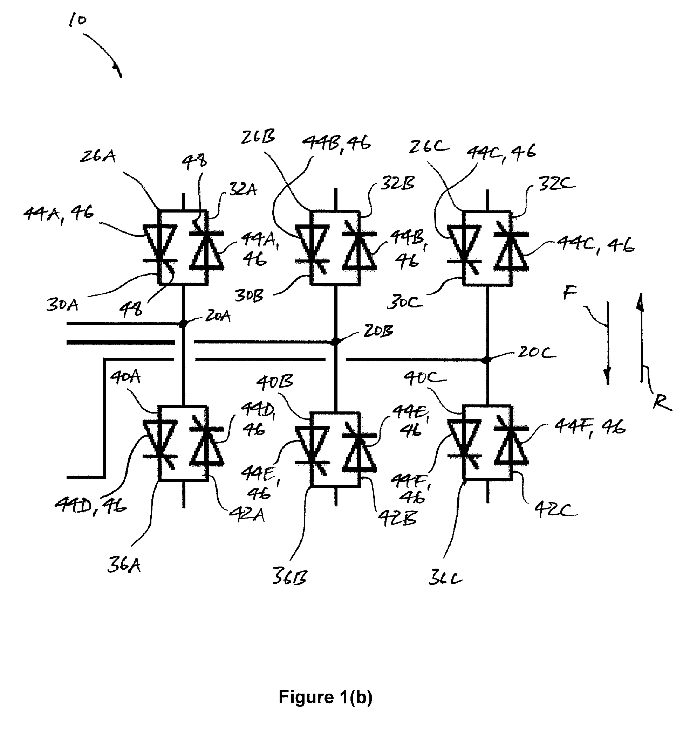

A voltage source converter according to a first embodiment of the invention is designated generally by reference numeral 10, as shown schematically in Figure 1.

The first voltage source converter 10 includes first, second and third converter limbs 12A, 12B, 12C. Each converter limb 12A, 12B, 12C includes a first DC terminal 14A, 14B, 14C that is, in use, connected to a higher voltage potential of a DC network 16, a second DC terminal 18A, 18B, 18C which is, in use, connected to a lower voltage potential of the DC network 16, and an AC terminal 20A, 20B, 20C that in use is connected to an AC network 22. The higher voltage potential of the DC network 16 is typically a positive voltage potential while the lower voltage potential is typically a negative voltage potential, often of the same magnitude as the positive voltage. The lower voltage potential may, however, be a zero voltage.

In other embodiments of the invention the voltage source converter 10 may include fewer than or more than three converter limbs.

Each converter limb 12A, 12B, 12C defines a first limb portion 24A, 24B, 24C that extends between the corresponding first DC terminal 14A, 14B, 14C and the corresponding AC terminal 20A, 20B, 20C. Each first limb portion 24A, 24B, 24C, in turn, includes a first switching element 26A, 26B, 26C which is connected in series with a first chain-link converter 28A, 28B, 28C that is operable to generate a voltage waveform at the corresponding AC terminal 20A, 20B, 20C.

Each first switching element 26A, 26B, 26C defines a first forward current path 30A, 30B, 30C to allow current to flow through the first switching element 26A, 26B, 26C in a forward direction F from the corresponding first DC terminal 14A, 14B, 14C to the corresponding AC terminal 20A, 20B, 20C.

Each first switching element 26A, 26B, 26C also defines a first reverse current path 32A, 32B, 32C to allow current to flow through the first switching element 26A, 26B, 26C in a reverse direction R from the corresponding AC terminal 20A, 20B, 20C to the corresponding first DC terminal 14A, 14B, 14C.

In addition to the foregoing, each converter limb 12A, 12B, 12C further defines a second limb portion 34A, 34B, 34C which extends between the corresponding second DC terminal 18A, 18B, 18C and the corresponding AC terminal 20A, 20B, 20C. Each second limb portion 34A, 34B, 34C includes a second switching element 36A, 36B, 36C which is connected in series with a second chain-link converter 38A, 38B, 38C this is similarly operable to generate a voltage waveform at the corresponding AC terminal 20A, 20B, 20C.

Each second switching element 36A, 36B, 36C defines a second forward current path 40A, 40B, 40C to allow current to flow through the second switching element 36A, 36B, 36C in a forward direction F from the corresponding AC terminal 20A, 20B, 20C to the corresponding second DC terminal 18A, 18B, 18C.

Each second switching element 36A, 36B, 36C also defines a second reverse current path 42A, 42B, 42C to allow current to flow through the second switching element 36A 36B, 36C in a reverse direction R from the corresponding second DC terminal 18A, 18B, 18C to the corresponding AC terminal 20A, 20B, 20C.

The first reverse current path 32A, 32B, 32C in each of the first switching elements 26A, 26B, 26C and the second reverse current path 42A, 42B, 42C in each of the second switching elements 36A, 36B, 36C is defined by an externally-commutated semiconductor switch 44A, 44B, 44C, 44D, 44E, 44F, i.e. by a semiconductor switch which is turned off by one or more external components causing the current flowing through the semiconductor switch to fall to zero.

More particularly, each forced-commutated semiconductor switch 44A, 44B, 44C, 44D, 44E, 44F takes the form of a thyristor 46, and each such thyristor 46 includes a gate terminal 48 to control turn-on of the thyristor 46.

In addition to the foregoing, in the embodiment shown, the first forward current path 30A, 30B, 30C in each of the first switching elements 26A, 26B, 26C and the second forward current path 40A, 40B, 40C in each of the second switching elements 36A, 36B, 36C is also defined by a externally-commutated semiconductor switch 44A, 44B, 44C, 44D, 44E, 44F in the form of a thyristor 46 which includes a gate terminal 48. In other embodiments however, the first and second forward current paths 30A, 30B, 30C, 40A, 40B, 40C may be defined by some other switch.

Meanwhile, each of the first and second chain-link converters 28A, 28B, 28C, 38A, 38B, 38C in the first, second and third converter limbs 12A, 12B, 12C of the embodiment shown includes a plurality of series-connected chain-link modules 50. Each chain-link module 50 includes a pair of first and second switch elements 52, 54 that are connected in parallel with a capacitor 56 in a known half-bridge arrangement to define a 2-quadrant unipolar module. In the embodiment shown each switch element 52, 54 includes a semiconductor device in the form of an Insulated Gate Bipolar Transistor (IGBT) 58 which is connected in parallel with an anti-parallel diode 60. Other semiconductor devices may, however, also be used instead of an IGBT.

In use, switching of the first and second switch elements 52, 54, i.e. the associated IGBTs 58, selectively directs current through the capacitor 34 or causes it to bypass the capacitor 34. In this manner each chain-link module 50 can provide a zero or positive voltage and can conduct current in two directions, i.e. in each of the aforementioned forward and reverse directions F, R.

In other embodiments of the invention (not shown) differently configured chain-link modules, such as those having a known full-bridge arrangement that defines a 4-quadrant bipolar module, may instead be included.

Returning to the embodiment shown, the inclusion of an antiparallel diode 60 in the second switch element 54 means that each chain-link module 50 will always permit the flow of current therethrough in the reverse direction R, i.e. through the said antiparallel diode 60 connected in parallel with the second switch element 54, irrespective of the open or closed state of either IGBT 58.

In use, during normal operation of the first voltage source converter 10, the first and second limb portions 24A, 24B, 24C, 34A, 34B, 34C of each converter limb 12A, 12B, 12C both separately conduct, with there additionally being an overlap period when both the first and second limb portions 24A, 24B, 24C, 34A, 34B, 34C of a given converter limb 12A, 12B, 12C are in conduction.

When in conduction, the chain-link converter 28A, 28B, 28C, 38A, 38B, 38C in each limb portion 24A, 24B, 24C, 34A, 34B, 34C adds finite voltage steps to the higher or lower voltage potential at the corresponding first or second DC terminal 14A, 14B, 14C, 18A, 18B, 18C to construct a high quality sinusoidal voltage waveform at the corresponding AC terminal 20A, 20B, 20C. By changing the relative magnitude of the voltage at the said corresponding AC terminal 20A, 20B, 20C compared to the voltage in the AC network 22, the first voltage source converter 10 draws real and reactive power from the AC network 22 and is able to exchange real power with the DC network 16.

Each respective limb portion 24A, 24B, 24C, 34A, 34B, 34C is brought into conduction by turning on the corresponding first or second switching element 26A, 26B, 26C, 36A, 36B, 36C. The said respective limb portion 24A, 24B, 24C, 34A, 34B, 34C will then remain in conduction while the current flowing through the corresponding first or second switching element 26A, 26B, 26C, 36A, 36B, 36C, and more particularly through the associated thyristor 46, is above a thyristor holding current.

The fine voltage control, as mentioned above, available from the plurality of series-connected chain-link modules 50 in the chain-link converter 28A, 28B, 28C, 38A, 38B, 38C in each limb portion 24A, 24B, 24C, 34A, 34B, 34C is used to accurately control the voltage and current in each limb portion 24A, 24B, 24C, 34A, 34B, 34C, and thereby turn off each corresponding first or second switching element 26A, 26B, 26C, 36A, 36B, 36C, i.e. each associated thyristor 46, as required during normal operation of the voltage source converter 10. Such turn-off is achieved via operation of the associated chain-link converter 28A, 28B, 28C, 38A, 38B, 38C to control the current flowing through the corresponding thyristor 46 to fall below the thyristor holding current and then ensure that the current is driven to zero by imposing a reverse voltage on each said associated thyristor 46, i.e. in an externally-commutated manner.

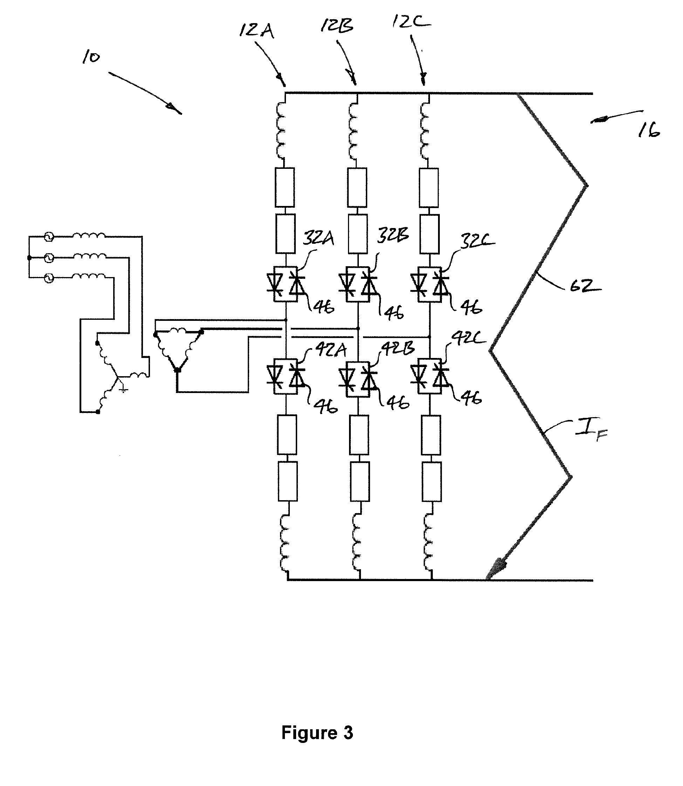

In the event of DC short-circuit fault 62 between respective first and second DC terminals 14A, 14B, 14C, 18A, 18B, 18C, i.e. abnormal operation of the first voltage source converter 10 as shown in Figure 3, the first and second switching elements 26A, 26B, 26C, 36A, 36B, 36C in each converter limb 12A, 12B, 12C is each configured to inhibit the flow of current through the corresponding reverse current path 32A, 32B, 32C, 42A, 42B, 42C.

Such inhibition of the flow of current through each corresponding reverse current path 32A, 32B, 32C, 42A, 42B, 42C is achieved as follows.

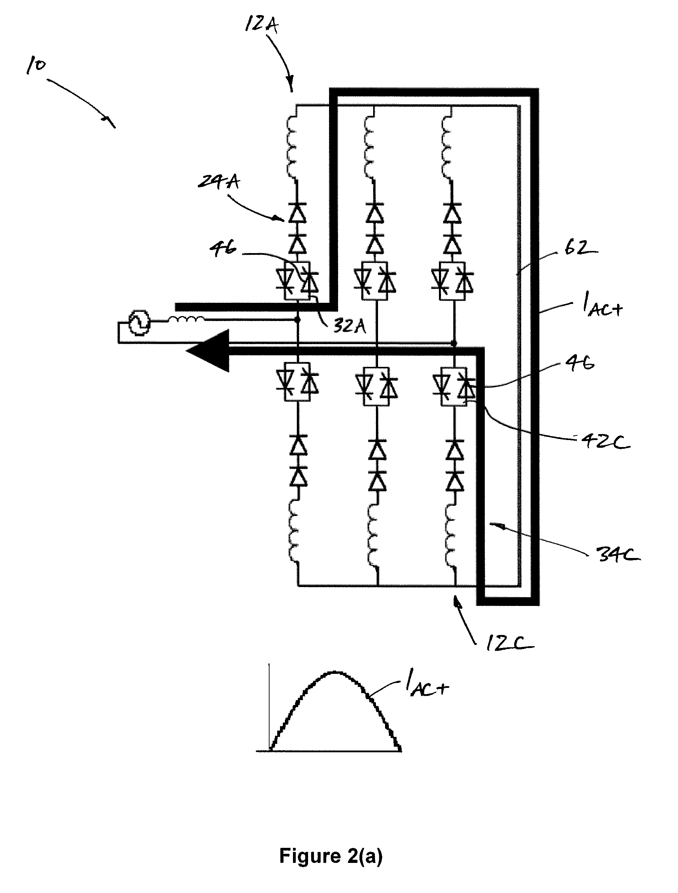

A positive portion of an AC current I_{AC+} resulting from, e.g. a corresponding sinusoidal AC network phase voltage, is directed through the first reverse current path 32A, i.e. the corresponding thyristor 46, in the first limb portion 24A of the first converter limb 12A and, via the said short-circuit fault 62, is directed also through the second reverse current path 42C, i.e. the corresponding thyristor 46, in the second limb portion 34C of the third converter limb 12C, as shown schematically in Figure 2(a).

Since the positive portion of the AC current I_{AC+} is driven by a sinusoidal AC voltage it naturally falls to zero, and so each of the said corresponding thyristors 46 which define the said first and second reverse current paths 32A, 42C turns off, and can be made to remain off, i.e. so as to subsequently inhibit the flow of current in the reverse direction R through each of the corresponding switching elements 26A, 36C, by withholding a turn-on signal from the associated gate terminal 48.

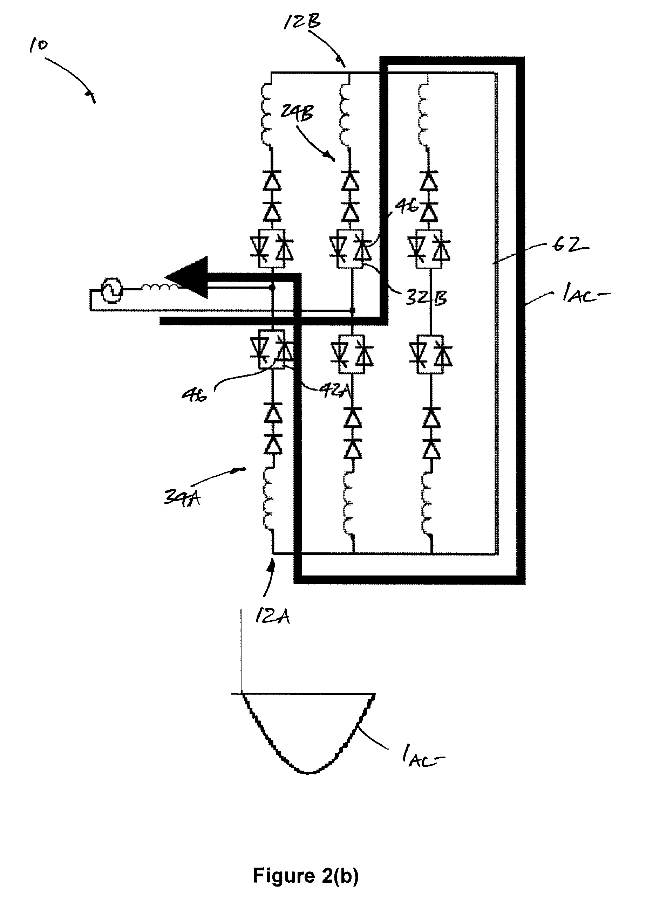

In a similar manner a negative portion of an AC current I_{AC-} resulting from a corresponding sinusoidal AC network phase voltage, is directed through the first reverse current path 32B, i.e. the corresponding thyristor 46, in the first limb portion 24B of the second converter limb 12B and, via the said short-circuit fault 62, is directed also through the second reverse current path 42A, i.e. the corresponding thyristor 46, in the second limb portion 34A of the first converter limb 12A, as shown schematically in Figure 2(b).

The negative portion of the AC current I_{AC-} is likewise driven by a sinusoidal AC voltage and so it also naturally falls to zero, such that each of the said corresponding thyristors 46 which define the said first and second reverse current paths 32B, 42A similarly turns off, and can be made to remain off, i.e. so as to subsequently inhibit the flow of current in the reverse direction R through each of the corresponding switching elements 26B, 36A, by withholding a turn-on signal from the associated gate terminal 48.

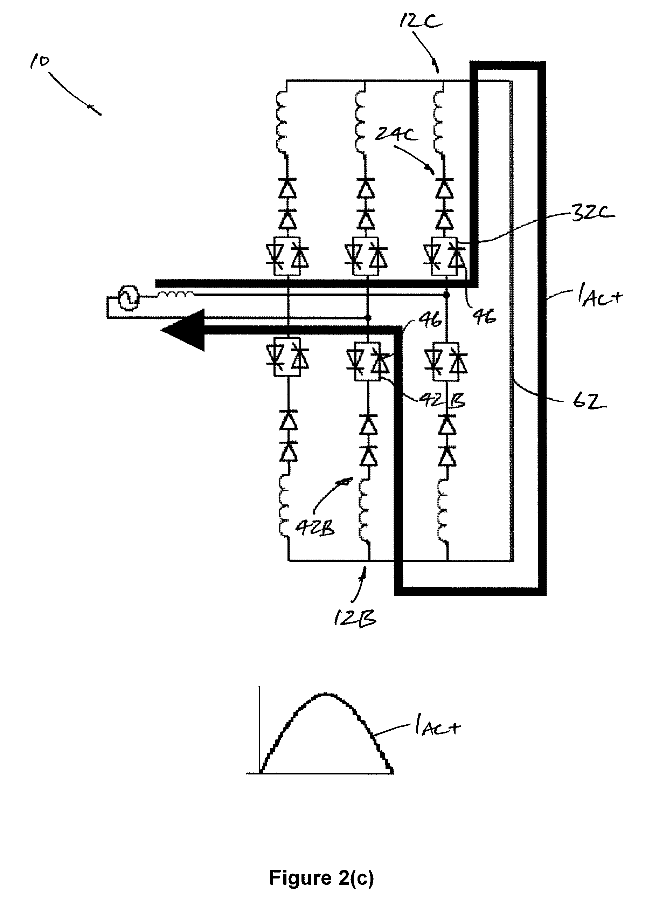

Meanwhile a further positive portion of an AC current I_{AC+} resulting from a corresponding sinusoidal AC network phase voltage, e.g. as arises in a further cycle of the said AC network phase voltage, is directed through the first reverse current path 32C, i.e. the corresponding thyristor 46, in the first limb portion 24C of the third converter limb 12C and, via the said short-circuit fault 62, is directed also through the second reverse current path 42B, i.e. the corresponding thyristor 46, in the second limb portion 34B of the second converter limb 12B, as shown schematically in Figure 2(c).

The further positive portion of the AC current I_{AC+} again naturally falls to zero, and so each of the said corresponding thyristors 46 which define the said first and second reverse current paths 32C, 42B again turns off, and can be made to remain off, i.e. so as to subsequently inhibit the flow of current in the reverse direction R through each of the corresponding switching elements 26C, 36B, by withholding a turn-on signal from the associated gate terminal 48.

Accordingly, the respective thyristor 46 that defines each of the reverse current paths 32A, 32B, 32C, 42A, 42B, 42C is switched off and is held in such an off condition (by withholding a turn-on signal from the associated gate terminal 48), as shown schematically in Figure 3. As a result a fault current I_{F} that arises from the DC short-circuit fault 62 cannot circulate within any of the converter limbs 12A, 12B, 12C and hence is blocked from passing into the voltage source converter 10.

In other embodiments of the invention (not shown) the positive and/or negative portions of an AC current may be directed through different combinations of first and second reverse current paths in order to effect the required turning off of the corresponding thyristors.

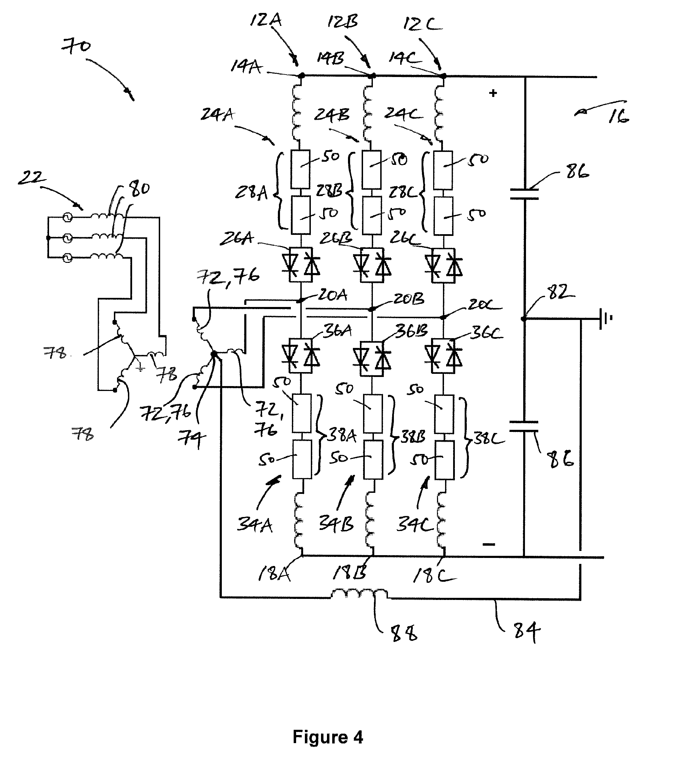

A voltage source converter 70 according to a second embodiment of the invention is shown in Figure 4.

The second voltage source converter 70 shares a number of features with the first voltage source converter 10 and these are designated using the same reference numerals.

As well as each of the first, second and third converter limbs 12A, 12B, 12C of the first voltage source converter 10, the second voltage source converter additionally includes three phase elements 72 which define a star connection in which a first end of each phase element 72 is connected to a common junction 74.

Each phase element 72 is operably associated in use with a respective phase of a three-phase AC network 22, and includes an impedance element in the form of a transformer winding 76. The star connection preferably defines, as shown a secondary side of a transformer in which each transformer winding 76 of the star connection is mutually coupled in use with a respective primary winding 78 at a primary side of the transformer, each primary winding 78 being connected to a respective phase of the three-phase AC network 22 via a line inductor 80.

The second voltage source converter 70 also additionally includes a third DC terminal 82 which is connected between the first and second DC terminals 14A, 14B, 14C, 18A, 18B, 18C. The third DC terminal 82 is also connected to the common junction 74 of the star connection to define an auxiliary connection 84.

As shown in Figure 4, the third DC terminal 82 may be connected in use to ground, although in other embodiments of the invention it may be left floating. A DC link capacitor 86 is also preferably connected between the third DC terminal 82 and each of a corresponding one of the first DC terminal 14A, 14B, 14C and the second DC terminal 18A, 18B, 18C.

Furthermore, the auxiliary connection 84 optionally includes a secondary impedance element 88.

In use, during normal operation, the second voltage source converter 70 functions in a similar manner to the first voltage source converter 70, with a current additionally being injected into the auxiliary connection 84 to modify a voltage of each of the plurality of series-connected chain-link modules 50 within each chain-link converter 28A, 28B, 28C, 38A, 38B, 38C of each limb portion 24A, 24B, 24C, 34A, 34B, 34C.

In the event of a DC short-circuit fault between respective first and second DC terminals 14A, 14B, 14C, 18A, 18B, 18C the second voltage source converter 70 blocks the flow of the resulting fault current in the same manner as described hereinabove in connection with the first voltage source converter 10.

## Claims

1. A voltage source converter for use in high voltage DC power transmission and reactive power compensation, the voltage source converter comprising at least one converter limb including a first DC terminal for connection in use to a higher voltage potential of a DC network, a second DC terminal for connection in use to a lower voltage potential of the said DC network and an AC terminal for connection in use to an AC network,
the or each converter limb defining a first limb portion extending between the first DC terminal and the AC terminal and including a first switching element connected in series with a first chain-link converter operable to generate a voltage waveform at the AC terminal, the first switching element defining a first forward current path to allow current to flow through the first switching element in a forward direction from the first DC terminal to the AC terminal and a first reverse current path to allow current to flow through the first switching element in a reverse direction from the AC terminal to the first DC terminal,
the or each converter limb further defining a second limb portion extending between the second DC terminal and the AC terminal and including a second switching element connected in series with a second chain-link converter operable to generate a voltage waveform at the AC terminal, the second switching element defining a second forward current path to allow current to flow through the second switching element in a forward direction from the AC terminal to the second DC terminal and a second reverse current path to allow current to flow through the second switching element in a reverse direction from the second DC terminal to the AC terminal, and
at least one of the first and second switching elements in the or each converter limb being configured to inhibit the flow of current through the corresponding reverse current path in the event of a DC short-circuit fault between the first and second DC terminals.

2. A voltage source converter according to Claim 1 wherein the reverse current path of the at least one switching element is defined by an externally-commutated semiconductor switch.

3. A voltage source converter according to Claim 2 wherein the reverse current path of the at least one switching element is defined by a thyristor.

4. A voltage source converter according to Claim 2 or Claim 3 including a plurality of converter limbs, each of which includes respective first and second limb portions that have corresponding series-connected switching elements and chain-link converters.

5. A voltage source converter according to Claim 4 wherein the first chain-link converter in the first limb portion of each converter limb and the second chain-link converter in the second limb portion of each converter limb always permit the flow of current therethrough in the reverse direction.

6. A voltage source converter according to any preceding claim further including:
three phase elements defining a star connection in which a first end of each phase element is connected to a common junction, each phase element being operably associated in use with a respective phase of a three-phase AC network and including at least one impedance element;
at least two converter limbs each of which includes respective first and second limb portions that have corresponding series-connected switching elements and chain-link converters, the AC terminal of each converter limb being connected in series with a second end of a phase element of the star connection; and
a third DC terminal connected between the first and second DC terminals, the third DC terminal being connected to the common junction of the star connection to define an auxiliary connection, wherein in use a current is injected into the auxiliary connection to modify a voltage of each of a plurality of series-connected chain-link modules within each chain-link converter of each limb portion.
